# EUROPEAN PATENT APPLICATION

(11) **EP 2 636 523 A1**
(43) Date of publication of application: **11.09.2013**
(21) Application number: 11837961.9
(22) Date of filing: 31.10.2011
(51) Int. Cl.: B32B 27/32, B29C 45/14

(54) **LAMINATED ADHESIVE FILM FOR USE IN INSERT MOLDING**

(30) Priority: 12.09.2011 JP 2011198592; 19.04.2011 JP 2011093384; 05.11.2010 JP 2010248924
(71) Applicant: Kaneka Corporation, Osaka 530-8288 (JP)
(72) Inventor: OOKURA,Tetsuo, Settsu-shi Osaka 566-0072 (JP); MICHINOBU,Takao, Settsu-shi Osaka 566-0072 (JP)
(74) Representative: Vossius & Partner
(86) International application number: PCT/JP2011/075025
(87) International publication number: WO 2012/060311

(57) **Abstract**

The present invention relates to a laminated adhesive film for insert molding, which includes a laminate of a tacky adhesive film containing a modified polyolefin resin and a non-tacky thermoplastic resin film. The present invention aims to provide a highly heat-resistant laminated adhesive film which can form on a metal component an adhesive layer that shows favorable adhesion to a resin to be injection-molded, by a VOC-free high-productivity method. The laminated adhesive film for insert molding of the present invention includes a laminate of a tacky adhesive film containing a modified polyolefin resin obtained through graft-modification with a monomer that contains an ethylenic double bond and a polar group in the same molecule, and a non-tacky thermoplastic resin film.

## Description

### TECHNICAL FIELD

The present invention relates to an adhesive film for use in insert molding which includes injection molding of a thermoplastic resin with a metal component placed in a mold. The present invention specifically relates to a laminated adhesive film for insert molding, which includes a laminate of a tacky adhesive film containing a modified polyolefin resin and a non-tacky thermoplastic resin film. The adhesive film is suitable as an adhesive layer that provides improved adhesion between a resin and a metal component in insert molding.

### BACKGROUND ART

Composite articles obtained by integrating a metal component and a resin component have been conventionally used for automobile interior components and the like. Exemplary methods for integrating a metal component and a resin component include a method of adhering the components with an adhesive, a method of fastening the metal component and resin component with a fixation part (e.g. folded-back portions, nails) provided with both components, and a method of bonding the components using screws or the like. The formation of composite articles obtained by integrating a metal component and a resin component without any adhesive, however, requires separately performing machining of the metal component and molding of the resin component before integrating the components, which brings the problem that the process is complicated and thus is not economical.

Also, the use of a solvent adhesive among adhesives may deteriorate the work environment because of VOC, and leads to a reduction in the yield because of factors such as poor adhesion caused by application unevenness and poor appearance of moldings caused by stringiness. Moreover, the use of a solvent adhesive is not economical because it requires the drying step after application, leading to enlarged equipment, longer takt time in production, and the like. For example, Patent Literature 1 describes a method that can rigidly adhere a metal component to a resin component by insert molding, but this method requires at least 30 minutes of drying for the adhesive.

Meanwhile, Patent Literature 2 describes a method including treating the surface of a metal material to form ultrafine irregularities, and combining the resulting metal material and a resin by insert molding, in other words, a method that substantially eliminates the use of adhesives. Still, the method has the problem that the treated metal surface may be oxidized over time and thus may decrease the adhesion.

### CITATION LIST

### PATENT LITERATURE

Patent Literature 1: JP 2009-73088 A
Patent Literature 2: JP 2010-64397 A

### SUMMARY OF INVENTION

### TECHNICAL PROBLEM

The present invention relates to a laminated adhesive film for insert molding, which includes a laminate of a tacky adhesive film containing a modified polyolefin resin and a non-tacky thermoplastic resin film. The present invention aims to provide a highly heat-resistant laminated adhesive film which can form on a metal component an adhesive layer that shows favorable adhesion to a resin to be injection-molded, by a VOC-free high-productivity method.

### SOLUTION TO PROBLEM

As a result of intensive studies made in view of the above state of the art, the present inventors have found that when a tacky adhesive film containing a modified polyolefin resin obtained through introduction of a polar group into a polyolefin resin is laminated to a non-tacky thermoplastic resin film, the obtained adhesive film has significantly improved workability during its lamination on a metal component, and at the same time allows the metal component to adhere well to a resin injection-molded and shows high heat resistance. More specifically, the adhesive film layer with a modified polyolefin resin having specific melting point, heat of fusion, and surface smoothness has tackiness to increase the adhesion to the metal component with which the adhesive film layer comes into contact, thereby facilitating the positioning. In addition, the adhesive film laminated to the non-tacky thermoplastic film does not stick to the hand. For such reasons and others, improved workability is obtained. The present inventors have also found that the non-tacky thermoplastic resin film as the outermost layer can greatly reduce heat deterioration of the adhesive film during the heat bonding step after the positioning, and it is thus possible to reduce the separation of the resulting insert-molded product due to fracture of the adhesive film layer and, in addition, that the obtained insert-molded product has heat resistance enough to be used as an automobile component, thereby completing the present invention.

Specifically, the present invention includes the following features.
(1) A laminated adhesive film for insert molding, including a laminate of
   a tacky adhesive film containing a modified polyolefin resin obtained through graft-modification with a monomer that contains an ethylenic double bond and a polar group in the same molecule, and
   a non-tacky thermoplastic resin film,
   the laminated adhesive film satisfying the following conditions:
   1) the modified polyolefin resin has a melting point of 120°C or higher,
   2) the modified polyolefin resin has a heat of fusion of 20 J/g or lower, and
   3) the adhesive film surface thereof has an arithmetic average surface roughness of 0.6 µm or less.
(2) The laminated adhesive film for insert molding according to item (1),
   wherein the adhesive film contains a modified polyolefin resin obtained through graft-modification with an aromatic vinyl monomer and a monomer that contains an ethylenic double bond and a polar group in the same molecule.
(3) The laminated adhesive film for insert molding according to item (1) or (2),
   wherein the monomer that contains an ethylenic double bond and a polar group in the same molecule is at least one selected from the group consisting of (meth)acrylic acid, maleic anhydride, and glycidyl (meth)acrylate.
(4) The laminated adhesive film for insert molding according to any one of items (1) to (3),
   which has a total thickness of 30 to 300 µm.
(5) The laminated adhesive film for insert molding according to any one of items (1) to (4),
   wherein the non-tacky thermoplastic resin film is a polyamide resin film.
(6) The laminated adhesive film for insert molding according to any one of items (1) to (5),
   wherein a polyamide resin is injected in the insert molding.
(7) The laminated adhesive film for insert molding according to any one of items (1) to (4),
   wherein the non-tacky thermoplastic resin film is a polypropylene resin film.
(8) The laminated adhesive film for insert molding according to any one of items (1) to (4) and (7), wherein a polypropylene resin is injected in the insert molding.
(9) An insert molding method, including:
   laminating the laminated adhesive film for insert molding according to any one of items (1) to (8) so as to bring the tacky adhesive film surface into contact with a metal component;
   melting the adhesive film part by heating so as to adhere the film to the metal component;
   placing the resulting laminated adhesive film-laminated metal component in a mold so that the non-tacky thermoplastic resin film surface faces the void of the mold; and
   injection-molding thereon a resin of the same kind as used in the non-tacky thermoplastic resin film.

### ADVANTAGEOUS EFFECTS OF INVENTION

When the laminated adhesive film for insert molding according to the present invention is used in insert molding with a metal component, an adhesive layer that shows favorable adhesion to the injected resin can be formed on the metal component by a VOC-free high-productivity method.

### DESCRIPTION OF EMBODIMENTS

### «Polyolefin resin»

Examples of the polyolefin resin to be graft-modified (hereinafter, referred to as the "starting polyolefin resin") used in the present invention include polyethylene, polypropylene, poly-1-butene, polyisobutylene, random copolymers or block copolymers of propylene and at least one of ethylene and 1-butene in various ratios, ethylene/propylene/diene terpolymers in which 50 wt% or lower of the diene component is combined with ethylene and propylene in various ratios, polymethylpentene, cyclic polyolefins (e.g., copolymers of cyclopentadiene and at least one of ethylene and propylene), and random copolymers or block copolymers of ethylene or propylene and 50 wt% or lower of a monomer such as a vinyl compound.

Among these, for improvement of the adhesion between the later-described adhesive film and a base material, olefin elastomers are preferred. The olefin elastomers are C2 to C20 α-olefin polymers or copolymers, and specific examples thereof include ethylene/propylene copolymers, ethylene/1-butene copolymers, ethylene/1-hexene copolymers, ethylene/4-methylpentene-1 copolymers, ethylene/1-octene copolymers, propylene homopolymers, propylene/ethylene copolymers, propylene/ethylene/1-butene copolymers, 1-butene homopolymers, 1-butene/ethylene copolymers, 1-butene/propylene copolymers, 4-methylpentene-1 homopolymers, 4-methylpentene-1/propylene copolymers, 4-methylpentene-1/1-butene copolymers, 4-methylpentene-1/propylene/1-butene copolymers, propylene/1-butene copolymers, ethylene/vinyl acetate copolymers, ethylene/methacrylic acid copolymers, and ethylene/methyl methacrylate copolymers. Propylene homopolymers, propylene/ethylene copolymers, and propylene/1-butene copolymers are preferred. Propylene/ethylene copolymers are particularly preferred.

Also, polyolefin resins into which a polar group has been introduced are usable because they are highly compatible with the later-described monomer that contains an ethylenic double bond and a polar group in the same molecule. Specific examples of the polyolefin resins containing a polar group include acid-modified polypropylenes such as maleic anhydride-modified polypropylene, maleic acid-modified polypropylene, and acrylic acid-modified polypropylene; ethylene or α-olefin/vinyl monomer copolymers such as ethylene/vinyl chloride copolymers, ethylene/vinylidene chloride copolymers, ethylene/acrylonitrile copolymers, ethylene/methacrylonitrile copolymers, ethylene/vinyl acetate copolymers, ethylene/acrylamide copolymers, ethylene/methacrylamide copolymers, ethylene/acrylic acid copolymers, ethylene/methacrylic acid copolymers, ethylene/maleic acid copolymers, ethylene/methyl acrylate copolymers, ethylene/ethyl acrylate copolymers, ethylene/isopropyl acrylate copolymers, ethylene/butyl acrylate copolymers, ethylene/isobutyl acrylate copolymers, ethylene/2-ethylhexyl acrylate copolymers, ethylene/methyl methacrylate copolymers, ethylene/ethyl methacrylate copolymers, ethylene/isopropyl methacrylate copolymers, ethylene/butyl methacrylate copolymers, ethylene/isobutyl methacrylate copolymers, ethylene/2-ethylhexyl methacrylate copolymers, ethylene/maleic anhydride copolymers, ethylene/ethyl acrylate/maleic anhydride copolymers, ethylene/metal acrylate copolymers, ethylene/metal methacrylate copolymers, ethylene/vinyl acetate copolymers and their saponified products, ethylene/vinyl propionate copolymers, ethylene/glycidyl methacrylate copolymers, ethylene/ethyl acrylate/glycidyl methacrylate copolymers, and ethylene/vinyl acetate/glycidyl methacrylate copolymers; and chlorinated polyolefins such as chlorinated polypropylene and chlorinated polyethylene. Two or more of these polar group-containing polyolefin resins may be used as a blend.

To the starting polyolefin resin may optionally be added other resins and rubbers unless the effect of the present invention is then spoiled.

Examples of the other resins and rubbers include poly α-olefins such as polypentene-1 and polymethylpentene-1; ethylene or α-olefin/α-olefin copolymers such as propylene/butene-1 copolymers with a propylene content of lower than 75 wt%; ethylene or α-olefin/α-olefin/diene monomer copolymers such as ethylene/propylene/5-ethylidene-2-norbornene copolymers with a propylene content of lower than 75 wt%; polydiene copolymers such as polybutadiene and polyisoprene; vinyl monomer/diene monomer random copolymers such as styrene/butadiene random copolymers and styrene/isoprene random copolymers; vinyl monomer/diene monomer/vinyl monomer block copolymers such as styrene/butadiene/styrene block copolymers and styrene/isoprene/styrene block copolymers; hydrogenated (vinyl monomer/diene monomer random copolymers) such as hydrogenated (styrene/butadiene random copolymers) and hydrogenated (styrene/isoprene random copolymers); hydrogenated (vinyl monomer/diene monomer/vinyl monomer block copolymers) such as hydrogenated (styrene/butadiene/styrene block copolymers) and hydrogenated (styrene/isoprene/styrene block copolymers); vinyl monomer/diene monomer/vinyl monomer graft copolymers such as acrylonitrile/butadiene/styrene graft copolymers and methyl methacrylate/butadiene/styrene graft copolymers; vinyl polymers such as polyvinyl chloride, polyvinylidene chloride, polyacrylonitrile, polyvinyl acetate, polyethyl acrylate, polybutyl acrylate, polymethyl methacrylate, and polystyrene; and vinyl copolymers such as vinyl chloride/acrylonitrile copolymers, vinyl chloride/vinyl acetate copolymers, acrylonitrile/styrene copolymers, and methyl methacrylate/styrene copolymers.

The amount of the other resins and rubbers to be added to the starting polyolefin resin varies depending on the particular resin or rubber used, and may be any amount unless the effect of the present invention is then spoiled, as mentioned above. In general, the amount is preferably about 25 wt% or less.

The starting polyolefin resin (which may include various additives) may be particulates or pellets, and their size and shape are not particularly limited.
In the case of using the above additives (other resins and rubbers), the additives may be added to the starting polyolefin resin before use or may be added at the time of melting of the starting polyolefin resin.

With respect to the propylene component in the starting polyolefin resin, the starting polyolefin resin preferably predominantly contains propylene units because radicals are then easily generated in the starting polyolefin resin. The "predominantly" herein means that the polyolefin resin includes 50 wt% or more of the propylene component.

### «Monomer containing ethylenic double bond and polar group in the same molecule»

The monomer that contains an ethylenic double bond and a polar group in the same molecule to be used for graft-modification of the starting polyolefin resin may be any monomer without particular limitations. The polar group may suitably be a carboxylic acid, acid anhydride, or a derivative thereof, for instance. Specific examples of such a monomer include unsaturated carboxylic acids such as acrylic acid, methacrylic acid, maleic acid, fumaric acid, tetrahydrophthalic acid, itaconic acid, citraconic acid, crotonic acid, isocrotonic acid, norbornene dicarboxylic acid, and bicyclo[2.2.1]hept-2-ene-5,6-dicarboxylic acid, and acid anhydrides or derivatives thereof (e.g. acid halides, amides, imides, esters). Specific examples of such compounds include malenyl chloride, malenyl imide, maleic anhydride, itaconic anhydride, citraconic anhydride, tetrahydrophthalic anhydride, bicyclo[2.2.1]hept-2-ene-5,6-dicarboxylic anhydride, dimethyl maleate, monomethyl maleate, diethyl maleate, diethyl fumarate, dimethyl itaconate, diethyl citraconate, dimethyl tetrahydrophthalate, dimethyl bicyclo[2.2.1]hept-2-ene-5,6-dicarboxylate, hydroxyethyl (meth)acrylate, hydroxypropyl (meth)acrylate, glycidyl (meth)acrylate, monoglycidyl maleate, diglycidyl maleate, monoglycidyl itaconate, diglycidyl itaconate, monoglycidyl allylsuccinate, diglycidyl allylsuccinate, glycidyl p-styrenecarboxylate, allyl glycidyl ether, methallyl glycidyl ether, styrene-p-glycidyl ether, p-glycidylstyrene, 3,4-epoxy-1-butene, 3,4-epoxy-3-methyl-1-butene, vinylcyclohexene monoxide, aminoethyl methacrylate, and aminopropyl methacrylate. Among these, (meth)acrylic acid, maleic anhydride, and glycidyl (meth)acrylate are preferred.

The monomer that contains an ethylenic double bond and a polar group in the same molecule may be used in any amount, and is preferably used in an amount of 0.1 to 20 parts by weight for each 100 parts by weight of the starting polyolefin resin. An amount of less than 0.1 parts by weight may not achieve sufficient adhesion of the resulting adhesive film, while an amount of more than 20 parts by weight may lead to a large amount of residual monomers, adversely affecting the physical properties.

When graft-modification of the starting polyolefin resin is carried out with the monomer that contains an ethylenic double bond and a polar group in the same molecule, other monomers may also be used as long as the aim of the present invention can be achieved. Examples of the other monomers include hydroxy group-containing ethylenically unsaturated compounds, amino group-containing ethylenically unsaturated compounds, aromatic vinyl monomers, conjugated diene compounds, vinyl ester compounds, vinyl chloride, and oxazoline group-containing unsaturated monomers.

Aromatic vinyl monomers are preferred because they reduce scission of molecular chains during grafting onto a molecular chain scission-type polyolefin such as polypropylene, thereby allowing the monomer that contains an ethylenic double bond and a polar group in the same molecule to be introduced at a high ratio while maintaining a high molecular weight.

For example, the aromatic vinyl monomer may be one or two or more of the following: styrene; methylstyrenes such as o-methylstyrene, m-methylstyrene, p-methylstyrene, α-methylstyrene, β-methylstyrene, dimethylstyrene, and trimethylstyrene; chlorostyrenes such as o-chlorostyrene, m-chlorostyrene, p-chlorostyrene, α-chlorostyrene, β-chlorostyrene, dichlorostyrene, and trichlorostyrene; bromostyrenes such as o-bromostyrene, m-bromostyrene, p-bromostyrene, dibromostyrene, and tribromostyrene; fluorostyrenes such as o-fluorostyrene, m-fluorostyrene, p-fluorostyrene, difluorostyrene, and trifluorostyrene; nitrostyrenes such as o-nitrostyrene, m-nitrostyrene, p-nitrostyrene, dinitrostyrene, and trinitrostyrene; vinylphenols such as o-hydroxystyrene, m-hydroxystyrene, p-hydroxystyrene, dihydroxystyrene, and trihydroxystyrene; divinylbenzenes such as o-divinylbenzene, m-divinylbenzene, and p-divinylbenzene; diisopropenylbenzenes such as o-diisopropenylbenzene, m-diisopropenylbenzene, and p-diisopropenylbenzene, and the like. Among these, styrene, methylstyrenes such as α-methylstyrene and p-methylstyrene, divinylbenzene monomers, and divinylbenzene isomeric mixtures are preferred in terms of inexpensiveness.

The amount of the aromatic vinyl monomer to be added is preferably 0.01 to 10 parts by weight, and more preferably 0.1 to 5 parts by weight, for each 100 parts by weight of the polyolefin resin. Too small an amount is likely to lead to an insufficient ratio of the monomer that contains an ethylenic double bond and a polar group in the same molecule grafted onto the polyolefin resin. Conversely, an amount of more than 10 parts by weight may achieve saturation with respect to the efficiency of grafting of the monomer that contains an ethylenic double bond and a polar group in the same molecule.

A modified polyolefin can be prepared by reacting the starting polyolefin resin, the monomer that contains an ethylenically unsaturated group and a polar functional group in the same molecule, and optionally an aromatic vinyl monomer in the presence of a radical polymerization initiator through heating.

### «Radical polymerization initiator»

Examples of the radical polymerization initiator include organic peroxides and azo compounds. For example, the radical polymerization initiator may be one or two or more of organic peroxides including: ketone peroxides such as methyl ethyl ketone peroxide and methyl acetoacetate peroxide; peroxyketals such as 1,1-bis(t-butylperoxy)-3,3,5-trimethylcyclohexane, 1,1-bis(t-butylperoxy)cyclohexane, n-butyl-4,4-bis(t-butylperoxy)valerate, and 2,2-bis(t-butylperoxy)butane; hydroperoxides such as permethane hydroperoxide, 1,1,3,3-tetramethylbutyl hydroperoxide, diisopropylbenzene hydroperoxide, and cumene hydroperoxide; dialkyl peroxides such as dicumyl peroxide, 2,5-dimethyl-2,5-di(t-butylperoxy)hexane, α,α'-bis(t-butylperoxy-m-isopropyl)benzene, t-butyl cumyl peroxide, di-t-butyl peroxide, and 2,5-dimethyl-2,5-di(t-butylperoxy)hexyne-3; diacyl peroxides such as benzoyl peroxide; peroxydicarbonates such as di(3-methyl-3-methoxybutyl)peroxydicarbonate and di-2-methoxybutyl peroxydicarbonate; and peroxy esters such as t-butyl peroxyoctoate, t-butyl peroxyisobutylate, t-butyl peroxylaurate, t-butyl peroxy-3,5,5-trimethylhexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate.

Among these, those which have a high hydrogen abstraction ability are particularly preferred, and such a radical polymerization initiator may, for example, be one or two or more of the following: peroxyketals such as 1,1-bis(t-butylperoxy)-3,3,5-trimethylcyclohexane, 1,1-bis(t-butylperoxy)cyclohexane, n-butyl-4,4-bis(t-butylperoxy)valerate, and 2,2-bis(t-butylperoxy)butane; dialkyl peroxides such as dicumyl peroxide, 2,5-dimethyl-2,5-di(t-butylperoxy)hexane, α,α'-bis(t-butylperoxy-m-isopropyl)benzene, t-butyl cumyl peroxide, di-t-butyl peroxide, and 2,5-dimethyl-2,5-di(t-butylperoxy)hexyne-3; diacyl peroxides such as benzoyl peroxide; peroxy esters such as t-butyl peroxyoctoate, t-butyl peroxyisobutylate, t-butyl peroxylaurate, t-butyl peroxy-3,5,5-trimethylhexanoate, t-butyl peroxyisopropylcarbonate, 2,5-dimethyl-2,5-di(benzoylperoxy)hexane, t-butyl peroxyacetate, t-butyl peroxybenzoate, and di-t-butyl peroxyisophthalate, and the like.

The amount of the radical polymerization initiator to be added is preferably 0.01 to 10 parts by weight, and more preferably 0.2 to 5 parts by weight, for each 100 parts by weight of the polyolefin resin. An amount of less than 0.01 parts by weight may not allow the modification to sufficiently proceed, while an amount of more than 10 parts by weight may unfortunately decrease the fluidity and mechanical properties.

### «Modified polyolefin resin»

The modified polyolefin resin in the present invention is a resin obtained through graft-modification of a polyolefin resin (starting polyolefin resin) with a monomer that contains an ethylenic double bond and a polar group in the same molecule. The modified polyolefin resin encompasses a composition of the graft-modified resin and an unmodified polyolefin resin, provided that it satisfies the melting point and heat of fusion defined below.

The modified polyolefin resin in the present invention has a melting point of 120°C or higher, preferably at least 125°C but not more than 165°C, and more preferably at least 130°C but not more than 160°C. The melting point of lower than 120°C gives insufficient heat resistance for automobile components and others, which may result in separation between the metal component and the resulting molded component at high temperatures. Also in the case of a melting point of higher than 165°C, the production of the starting polyolefin resin poses technical difficulties.

The modified polyolefin resin in the present invention has a heat of fusion of 20 J/g or lower, preferably at least 0.1 J/g but not more than 18 J/g, and more preferably at least 0.2 J/g but not more than 15 J/g. The heat of fusion of higher than 20 J/g leads to insufficient tackiness and therefore insufficient initial adhesion between the adhesive film layer and a base material in contact with the layer, greatly decreasing the working efficiency because of, for example, difficulties in positioning. Also, the production of the starting polyolefin resin having a heat of fusion of lower than 0.1 J/g poses technical difficulties. Further, such a polyolefin resin may give insufficient heat resistance, resulting in separation between the metal component and the resulting molded component at high temperatures. The melting point and the heat of fusion can be determined by, for example, the methods described in the examples mentioned below.

The desired melting point and heat of fusion of the modified polyolefin resin can be easily achieved by using the starting polyolefin resin having these properties. The melting point and heat of fusion of the modified polyolefin resin are also adjustable by blending multiple starting polyolefin resins before modification or by adding an unmodified or modified polyolefin resin to the modified polyolefin resin. In the case of using multiple polyolefin resins as above, if the polyolefin resins each predominantly contain propylene units, a mixture of these resins has a melting point around the melting point of the higher melting point polyolefin resin, and has a heat of fusion close to the arithmetic average of the heats of fusion of the resins. Thus, based on this knowledge, the melting point and heat of fusion can be easily adjusted.

Moreover, the modified polyolefin resin may be mixed with a thermoplastic resin other than polyolefin resins before use.

Examples of the thermoplastic resin which can be mixed with the modified polyolefin resin include vinyl monomer/diene monomer random copolymers such as styrene/butadiene random copolymers and styrene/isoprene random copolymers; vinyl monomer/diene monomer/vinyl monomer block copolymers such as styrene/butadiene/styrene block copolymers and styrene/isoprene/styrene block copolymers; hydrogenated (vinyl monomer/diene monomer random copolymers) such as hydrogenated (styrene/butadiene random copolymers) and hydrogenated (styrene/isoprene random copolymers); hydrogenated (vinyl monomer/diene monomer/vinyl monomer block copolymers) such as hydrogenated (styrene/butadiene/styrene block copolymers) and hydrogenated (styrene/isoprene/styrene block copolymers); vinyl monomer/diene monomer/vinyl monomer graft copolymers such as acrylonitrile/butadiene/styrene graft copolymers and methyl methacrylate/butadiene/styrene graft copolymers; vinyl polymers such as polyvinyl chloride, polyvinylidene chloride, polyacrylonitrile, polyvinyl acetate, polyethyl acrylate, polybutyl acrylate, polymethyl methacrylate, and polystyrene; and vinyl copolymers such as vinyl chloride/acrylonitrile copolymers, vinyl chloride/vinyl acetate copolymers, acrylonitrile/styrene copolymers, and methyl methacrylate/styrene copolymers. Each of these may be used alone, or two or more of these may be used as a blend.

Among these, for high heat resistance of the resulting adhesive film and high tendency to maintain the surface tackiness, vinyl monomer/diene monomer/vinyl monomer block copolymers such as styrene/butadiene/styrene block copolymers and styrene/isoprene/styrene block copolymers, and hydrogenated (vinyl monomer/diene monomer/vinyl monomer block copolymers) such as hydrogenated (styrene/butadiene/styrene block copolymers) and hydrogenated (styrene/isoprene/styrene block copolymers) are preferred.

The amount of unmodified polyolefin resins and other thermoplastic resins to be mixed with the graft-modified polyolefin resin is preferably 0.1 to 50 parts by weight, and more preferably 0.1 to 30 parts by weight, for each 100 parts by weight of the graft-modified polyolefin resin, in terms of the adhesion of the resulting adhesive film.

The present invention may employ a tackifier to improve the surface tackiness of the adhesive film. Examples of the tackifier include rosin resins (e.g. gum rosin, tall oil rosin, wood rosin, hydrogenated rosin, disproportionated rosin, polymerized rosin, maleic rosin, rosin esters), terpene phenol resins, terpene resins (e.g. polymers of α-pinene, β-pinene, limonene or the like), aromatic hydrocarbon-modified terpene resins, petroleum resins (e.g. aliphatic, alicyclic, and aromatic petroleum resins), coumarone-indene resins, styrene resins, phenol resins (e.g. alkylphenols, phenol xylene formaldehyde, rosin-modified phenol resins), and xylene resins. Each of these may be used alone, or two or more of these may be used in combination. Among these, rosin resins, terpene phenol resins, terpene resins, aromatic hydrocarbon-modified terpene resins, petroleum resins, and hydrogenated petroleum resins are preferred in terms of thermal stability, and rosin resins and terpene phenol resins are particularly preferred in that they are compatible with the modified polyolefin resin in the present invention and also contribute to the adhesion to polar resins.

The amount of the tackifier to be mixed with the modified polyolefin resin is preferably 0.1 to 50 parts by weight, and more preferably 0.1 to 30 parts by weight, for each 100 parts by weight of the modified polyolefine resin, in terms of heat resistance of the resulting adhesive film.

To the modified polyolefin resin may optionally be added stabilizers (e.g. antioxidant, metal deactivator, phosphorus processing stabilizer, UV absorber, UV stabilizer, fluorescent brightener, metal soap, antacid adsorbent) and other additives such as cross-linking agents, chain transfer agents, nucleating agents, lubricants, plasticizers, fillers, reinforcing agents, pigments, dyes, flame retardants, and antistatic agents unless the effect of the present invention is then spoiled. Each of these stabilizers and other additives may be added to the starting polyolefin resin before use or at the time of graft-modification of the starting polyolefin resin, or may be added to the modified polyolefin resin prepared from the starting polyolefin resin, by an appropriate method.

The polymerization reaction for the graft-modification in the present invention may be any polymerization, including solution polymerization, impregnation polymerization, and melt polymerization. Particularly, melt polymerization is preferred in terms of simpleness.

According to the melt polymerization, the starting polyolefin resin, the radical polymerization initiator, the monomer that contains an ethylenic double bond and a polar group in the same molecule, and optionally the aromatic vinyl monomer are kneaded while the polyolefin resin is melted.

The heating temperature during the melt kneading is preferably 100 to 300°C because then the starting polyolefin resin is sufficiently melted but does not undergo pyrolysis. The time of the melt kneading is typically 30 seconds to 60 minutes.

The device for the melt kneading may be, for example, an extruder, a Banbury mixer, a mill, a kneader, or a heat roller. In terms of productivity, methods employing a single or twin screw extruder are preferred. The melt kneading may be repeated multiple times in order to sufficiently uniformly mix the materials.

### «Laminated adhesive film for insert molding»

The present invention features a laminated adhesive film for insert molding which includes a laminate of a tacky adhesive film containing a modified polyolefin resin and a non-tacky thermoplastic resin film. In particular, the laminated adhesive film can be suitably used in integral molding of a metal component and a resin by insert molding.

The insert molding method using the laminated adhesive film for insert molding according to the present invention is described below. The method includes adhesively laminating the laminated adhesive film for insert molding so as to bring the adhesive film surface into contact with a metal component; melting the adhesive film part by heating so as to adhere the film to the metal component; placing the resulting laminated adhesive film laminated-metal component in a mold so that the thermoplastic resin film surface faces the void of the mold; and injection-molding thereon a resin. The resin to be injection-molded has high affinity for the thermoplastic resin film in the present invention, and is preferably a resin of the same kind as used in the thermoplastic resin film.

Since the thermoplastic resin film side of the laminated adhesive film for insert molding of the present invention comes into contact with the injected resin, favorable adhesion is achieved between the injected resin and the laminated adhesive film for insert molding.
The adhesive film surface of the laminated adhesive film for insert molding of the present invention has an arithmetic average surface roughness of 0.6 µm or less, preferably at least 0.01 µm but not more than 0.5 µm. If the modified polyolefin resin has a predetermined heat of fusion as mentioned above, and the adhesive film surface has an arithmetic average surface roughness in the above range, then, for example, the desired tackiness is achieved, the adhesion to the metal component is increased, and easy attachment to a desired predetermined position is enabled, greatly improving the workability. If the adhesive film surface has an arithmetic average surface roughness of less than 0.01 µm, the expected performance can still be achieved, but such a preparation is not economical as the production cost is increased.

The arithmetic average surface roughness (Ra) in the present invention is a value as defined in JIS B 0601-1994, which is obtained by extracting a reference length from the roughness curve in a direction of an mean line thereof, summing up the absolute values of deviations between the average line and the measured curve over the range of the extracted portion, and averaging the sum. The arithmetic average surface roughness can be determined by, for example, the method described in the examples mentioned below.

The method for controlling the arithmetic average surface roughness of the adhesive film surface in a predetermined range may be any method, including a method of laminating a film (e.g. PET film) having the aforementioned surface roughness onto the adhesive film by the T-die method during melt extrusion molding, thereby transferring the surface roughness to the adhesive film.
In the case of controlling the surface roughness by lamination, a film with a release treated-surface is preferably used to facilitate peeling of the adhesive film.

The material of the non-tacky thermoplastic resin film of the laminated adhesive film for insert molding of the present invention is preferably a polypropylene resin or polyamide resin. These resins are preferred because they are often used in the automobile field and the like, and achieve favorable adhesion when the resin film is selected to be of the same kind as the resin to be integrally molded by insert molding.
The laminated adhesive film for insert molding of the present invention, in which the thermoplastic resin film is laminated, has proper hardness compared to a monolayer adhesive film and thus is easy to punch into a desired shape, and furthermore does not stick to the hand during working. Accordingly, the laminated adhesive film has excellent workability.

Since the material of the thermoplastic resin film for the laminated adhesive film for insert molding of the present invention is selected according to the resin to be injection-molded, the material may be any material as long as it has no tackiness and is able to adhere to the modified polyolefin resin. For example, such a resin may be one or two or more of the following: polyolefin (e.g., polyethylene, polypropylene, ethylene/vinyl acetate copolymers), polystyrene, styrene/acrylonitrile/butadiene copolymers, polyamide, polyester, polyimide, polycarbonate, polyphenylene ether, polyphenylene sulfide, and the like. Among these, polypropylene resins and polyamide resins are preferred. These resins are relatively more crystalline than the material of the adhesive film, and have excellent gas barrier properties. Hence, these resins can block the air during heating for adhering the film to the metal component, and reduce deterioration of the adhesive film containing the modified polyolefin resin. Moreover, the polypropylene resins and polyamide resins are preferred because they are often used in the automobile field and the like, and achieve favorable adhesion when the resin film is selected to be of the same kind as the resin to be integrally molded by insert molding.

The "tacky" herein means having a level of surface tackiness of No. 3 or higher in a test using a rolling ball device defined in "Inclined ball tack testing method" in JIS Z 0237 at 23°C and an inclination angle of 5°. Also, the "non-tacky" means having a level of surface tackiness that is below the range mentioned above.
The level of surface tackiness of the tacky adhesive film surface in the present invention is No. 3 or higher in terms of the adhesion to the metal component. However, the level of surface tackiness of higher than No. 24 is not preferred because, when the adhesive film is attached to the metal component, air is likely to be trapped between the adhesive film surface and the metal component.

The level of surface tackiness of the non-tacky thermoplastic resin film in the present invention should be No. 2 or lower in order for the film not to strongly stick to the hand during attachment to the metal component to deteriorate the workability. The level of surface tackiness is preferably such that the No. 2 ball does not stop.

For example, the polypropylene resin film usable in the present invention may be a film made from one or two or more of the following, but not limited to: propylene homopolymers, propylene/ethylene copolymers, and propylene/1-butene copolymers. The film preferably has a heat of fusion of 40 J/g because such a film has proper hardness leading to favorable workability, and also has gas barrier properties enough to reduce heat deterioration of the adhesive film. The film may be a stretched film or non-stretched film.

Examples of the polyamide resin film usable in the present invention include, but not limited to, films made from polycaproamide (Nylon-6), polyhexamethylene adipamide (Nylon-66), polytetramethylene adipamide (Nylon-46), and/or polydodecanamide (Nylon-12). Among these, Nylon-6 is preferred because it is comparatively inexpensive and is readily melted by heat from the resin injected in insert molding. The film may be a stretched film or non-stretched film.

The laminated adhesive film for insert molding of the present invention preferably has a thickness of 30 µm to 300 µm, and more preferably 50 µm to 200 µm, because then sufficient adhesion is achieved in insert molding and the injection pressure does not easily increase. The adhesive film layer and the thermoplastic resin film layer each have a thickness of 10 µm or more.

The laminated adhesive film for insert molding according to the present invention may be prepared by any method, including a method of forming the modified polyolefin resin into a film using a device such as an extrusion-molding machine, calendar molding machine and an inflation molding machine, and then laminating the film to the thermoplastic resin film; a method of extrusion-laminating the modified polyolefin resin onto the thermoplastic resin film; and a method of co-extruding the modified polyolefin resin and the thermoplastic resin.

When the adhesive film layer shows surface tackiness, a release separator for a pressure sensitive adhesive is preferably laminated onto the adhesive film side. The release separator for a pressure sensitive adhesive to be used is not particularly limited, and is preferably paper or a PET film each of which is release-treated by fluorine coating, silicone coating, embossing, incorporation of talc, or the like.

The metal component to be used in insert molding using the laminated adhesive film for insert molding in the present invention may be any metal component to which the laminated adhesive film for insert molding of the present invention can adhere, including gold, silver, copper, tin, lead, steel, stainless steel, aluminum, aluminum alloys, galvalume, and zinc-coated steel. Among these, steel, stainless steel, aluminum, aluminum alloys, galvalume, and zinc-coated steel are preferred. Two or more of metal insert components may be used at the same time depending on the use.

For example, the polypropylene resin usable in insert molding using the laminated adhesive film for insert molding in the present invention may be one or two or more of the following, but not limited to: propylene homopolymers, propylene/ethylene copolymers, and propylene/1-butene copolymers. These polypropylene resins may contain filler (e.g. talc, kaolin, mica, montmorillonite, glass fiber, and carbon fiber) and polyethylene resins.

Examples of the polyamide resin usable in insert molding using the laminated adhesive film for insert molding in the present invention include, but not limited to, polycaproamide (Nylon-6), polyhexamethylene adipamide (Nylon-66), polytetraethylene adipamide (Nylon-46), and polydodecanamide (Nylon-12). These polyamide resins may contain filler (e.g. talc, kaolin, mica, montmorillonite, glass fiber, and carbon fiber).

### EXAMPLES

Some specific examples of the present invention are described below, but these examples are not intended to limit the scope of the present invention. The expressions "part(s)" and "%" in the following examples and comparative examples respectively represent "part(s) by weight" and "% by weight".

### [Determination of melting point and heat of fusion]

The melting point and the heat of fusion were determined as follows. The melting point was determined from the peak temperature of a melting peak obtained by increasing, in a differential scanning calorimeter (DSC), the temperature of a sample (1 to 10 mg) from 40°C to 210°C at a rate of 10°C/min and holding the increased temperature for five minutes; subsequently decreasing the temperature from 210°C to 40°C at a rate of 10°C/min and holding the decreased temperature for five minutes; and increasing the temperature again from 40°C to 210°C at a rate of 10°C/min. The heat of fusion was determined from the amount of heat calculated from the area between the peak and the baseline. The differential scanning calorimeter used was Shimadzu differential scanning calorimeter DSC-50 (product of Shimadzu Corporation).

### [Measurement of arithmetic average surface roughness]

The arithmetic average surface roughness of the adhesive film was measured using "Color 3D Profile Measuring Microscope VK-9500", product of Keyence Corporation.

### [Measurement of surface tackiness]

The adhesive film surface of the film was subjected to a measurement in accordance with JIS Z 0237 "Inclined ball tack testing method", except that the inclination angle was 5°.

### (Example 1)

An amount of 100 parts of polypropylene ethylene rubber (Versify 3401.05 produced by Dow Chemical, MFR = 8, melting point: 143°C, heat of fusion: 8 J/g) and 0.5 parts of 1,3-di(t-butylperoxyisopropyl)benzene (PERBUTYL P produced by NOF Corporation, 1-minute half-life temperature: 175°C) were fed through a hopper inlet to a twin screw extruder (44 mmφ, L/D = 38.5, product of The Japan Steel Works, LTD., product name: TEX44XCT) which was set to have a cylinder temperature of 200°C and a screw rotation speed of 150 rpm, and they were then melt-kneaded. Subsequently, 3 parts of styrene and 5 parts of glycidyl methacrylate were added in the middle of the cylinder and melt-kneaded to obtain modified polyolefin resin pellets (A-1). The obtained resin had a melting point of 143°C and a heat of fusion of 6 J/g. The obtained resin pellets (A-1) were fed through a hopper to a single screw extruder (product of Toyo Seiki Seisaku-sho, Ltd., product name: LABO PLASTOMILL, φ20 mm, L/D = 20) which was set to have cylinder and die temperatures of 200°C and a screw rotation speed of 100 rpm. The resin was extruded through a T-die mounted to the die tip, so as to be laminated onto a release-treated PET film, whereby an adhesive film (A-1T) having a width of about 13 cm and a thickness of 50 µm was obtained. The obtained adhesive film was heat-laminated to a polyamide resin film (product of Toyobo Co., Ltd., N1100-25, biaxially stretched film, 25 µ thick) at 200°C, whereby a laminated adhesive film (A-1L) was obtained. The adhesive film surface of the laminated adhesive film had an arithmetic average surface roughness of 0.4 µm and a level of surface tackiness of No. 4.
The obtained laminated adhesive film (A-1L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, but remained adhered rigidly to each other so that material failure could occur in the polyamide resin film.

The aluminum plate that was heat-bonded to the laminated adhesive film was placed in a mold in an injection molding machine (product of TOYO MACHINERY & METAL CO., LTD., mold clamping force: 100 t), and a glass fiber-reinforced nylon-6 resin (product of UNITIKA LTD., A1022GFL, glass fiber content: 30%) was insert-molded at a cylinder temperature of 320°C, an injection speed of 100 mm/s, and a mold temperature of 40°C to obtain an insert-molded product formed of the aluminum plate and the nylon-6 resin. The bonded surfaces of the insert-molded product were attempted to be separated from each other, but remained adhered rigidly to each other so that the aluminum plate could be deformed. The mold used for molding had a cavity size of 127 mm x 30 mm x 3 mm. Also, one surface of the mold was provided with a recess for engagement with the aluminum plate, at a position different from the cavity. Thus, when the aluminum plate is inserted into the recess, the mold is clamped under conditions where a 68-mm-long portion of the 120-mm-long aluminum plate is located inside the cavity. For insert molding, the aluminum plate was inserted such that the laminated adhesive film which was heat-bonded to the aluminum plate was located inside the cavity.

### (Example 2)

An amount of 100 parts of polypropylene ethylene rubber (Versify 3401.05 produced by Dow Chemical, MFR = 8, melting point: 143°C, heat of fusion: 8 J/g) and 0.5 parts of 1,3-di(t-butylperoxyisopropyl)benzene (product of NOF Corporation, PERBUTYL P, 1-minute half-life temperature: 175°C) were fed through a hopper inlet to a twin screw extruder (44 mmφ, L/D = 38.5, product of The Japan Steel Works, LTD., product name: TEX44XCT) which was set to have a cylinder temperature of 200°C and a screw rotation speed of 150 rpm, and they were melt-kneaded. Subsequently, 5 parts of styrene and 5 parts of glycidyl methacrylate were added in the middle of the cylinder and melt-kneaded to obtain modified polyolefin resin pellets (A-2). The obtained resin had a melting point of 143°C and a heat of fusion of 6 J/g. The obtained resin pellets (A-2) were fed through a hopper to a single screw extruder (product of Toyo Seiki Seisaku-sho, Ltd., product name: LABO PLASTOMILL, φ20 mm, L/D=20) which was set to have cylinder and die temperatures of 200°C and a screw rotation speed of 100 rpm. The resin was extruded through a T-die mounted to the die tip, so as to be laminated onto a release-treated PET film, whereby an adhesive film (A-2T) having a width of about 13 cm and a thickness of 50 µm was obtained. The obtained adhesive film was heat-laminated to a polyamide resin film (product of Toyobo Co., Ltd., N1100-25, biaxially stretched film, 25 µ thick) at 200°C, whereby a laminated adhesive film (A-2L) was obtained. The adhesive film surface of the laminated adhesive film had an arithmetic average surface roughness of 0.4 µm and a level of surface tackiness of No. 4.
The obtained laminated adhesive film (A-2L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, but remained adhered rigidly to each other so that material failure could occur in the polyamide resin film.

### (Example 3)

An amount of 100 parts of polypropylene ethylene rubber (Versify 3401.05 produced by Dow Chemical, MFR = 8, melting point: 143°C, heat of fusion: 8 J/g), 0.1 parts of 1,3-di(t-butylperoxyisopropyl)benzene (product of NOF Corporation, PERBUTYL P, 1-minute half-life temperature: 175°C), and 10 parts of maleic anhydride (product of Wako Pure Chemical Industries, Ltd.) were fed through a hopper inlet to a twin screw extruder (44 mmφ, L/D =38.5, product of The Japan Steel Works, LTD., product name: TEX44XCT) which was set to have a cylinder temperature of 200°C and a screw rotation speed of 150 rpm, and they were melt-kneaded. Subsequently, 5 parts of styrene was added in the middle of the cylinder and melt-kneaded to obtain modified polyolefin resin pellets (A-3). The obtained resin had a melting point of 143°C and a heat of fusion of 6 J/g. The obtained resin pellets (A-3) were fed through a hopper to a single screw extruder (product of Toyo Seiki Seisaku-sho, Ltd., product name: LABO PLASTOMILL, φ20 mm, L/D = 20) which was set to have cylinder and die temperatures of 200°C and a screw rotation speed of 100 rpm. The resin was extruded through a T-die mounted to the die tip, so as to be laminated onto a release-treated PET film, whereby an adhesive film (A-3T) having a width of about 13 cm and a thickness of 50 µm was obtained. The obtained adhesive film was heat-laminated to a polyamide resin film (product of Toyobo Co., Ltd., N1100-25, biaxially stretched film, 25 µ thick) at 200°C, whereby a laminated adhesive film (A-3L) was obtained. The adhesive film surface of the laminated adhesive film had an arithmetic average surface roughness of 0.4 µm and a level of surface tackiness of No. 4.
The obtained laminated adhesive film (A-3L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, but remained adhered rigidly to each other so that material failure could occur in the polyamide resin film.

### (Example 4)

A mixture of 90 parts of the modified polyolefin resin pellets (A-1) from Example 1 and 10 parts of propylene homopolymer pellets (S119 produced by Prime Polymer Co., Ltd., MFR = 60, melting point: 164°C, heat of fusion: 103 J/g) was fed through a hopper inlet to a twin screw extruder (44 mmφ, L/D = 38.5, product of The Japan Steel Works, LTD., product name: TEX44XCT) which was set to have a cylinder temperature of 200°C and a screw rotation speed of 150 rpm, and they were melt-kneaded to obtain modified polyolefin resin pellets (A-4). The obtained resin had a melting point of 161°C and a heat of fusion of 14 J/g. The obtained resin pellets (A-4) were fed through a hopper to a single screw extruder (product of Toyo Seiki Seisaku-sho, Ltd., product name: LABO PLASTOMILL, φ20 mm, L/D = 20) which was set to have cylinder and die temperatures of 200°C and a screw rotation speed of 100 rpm. The resin was extruded through a T-die mounted to the die tip, so as to be laminated onto a release-treated PET film, whereby an adhesive film (A-4T) having a width of about 13 cm and a thickness of 50 µm was obtained. The obtained adhesive film was heat-laminated to a polyamide resin film (product of Mitsubishi Plastics, Inc., DIAMIRON C, non-stretched film, 25 µ thick) at 200°C, whereby a laminated adhesive film (A-4L) was obtained. The adhesive film surface of the laminated adhesive film had an arithmetic average surface roughness of 0.4 µm and a level of surface tackiness of No. 3.
The obtained laminated adhesive film (A-4L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, but remained adhered rigidly to each other so that material failure could occur in the polyamide resin film.

### (Example 5)

The adhesive film (A-1T) from Example 1 was heat-laminated to a polypropylene resin film (product of Toyobo Co., Ltd., PYLEN film-CT P1111, non-stretched film, 50 µ thick) at 200°C, whereby a laminated adhesive film (A-5L) was obtained. The adhesive film surface of the laminated adhesive film had an arithmetic average surface roughness of 0.4 µm and a level of surface tackiness of No. 4.
The obtained laminated adhesive film (A-5L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, but remained adhered rigidly to each other so that material failure could occur in the polypropylene resin film.

The aluminum plate that was heat-bonded to the laminated adhesive film was placed in a mold in an injection molding machine (product of TOYO MACHINERY & METAL CO.,LTD., mold clamping force: 100 t), and a polypropylene resin (J708UG produced by Prime Polymer Co., Ltd., MFR = 45) was insert-molded at a cylinder temperature of 220°C, an injection speed of 100 mm/s, and a mold temperature of 40°C to obtain an insert-molded product formed of the aluminum plate and the polypropylene resin. The bonded surfaces of the insert-molded product were attempted to be separated from each other, but remained adhered rigidly to each other so that the aluminum plate could be deformed.

### (Example 6)

The adhesive film (A-2T) from Example 2 was heat-laminated to a polypropylene resin film (product of Toyobo Co., Ltd., PYLEN film-CT P1111, non-stretched film, 50 µ thick) at 200°C, whereby a laminated adhesive film (A-6L) was obtained. The adhesive film surface of the laminated adhesive film had an arithmetic average surface roughness of 0.4 µm and a level of surface tackiness of No. 4.
The obtained laminated adhesive film (A-6L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, but remained adhered rigidly to each other so that material failure could occur in the polypropylene resin film.

### (Example 7)

The adhesive film (A-3T) from Example 3 was heat-laminated to a polypropylene resin film (product of Toyobo Co., Ltd., PYLEN film-CT P1111, non-stretched film, 50 µ thick) at 200°C, whereby a laminated adhesive film (A-7L) was obtained. The adhesive film surface of the laminated adhesive film had an arithmetic average surface roughness of 0.4 µm and a level of surface tackiness of No. 4.
The obtained laminated adhesive film (A-7L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not came out of the desired position even when swung violently. The obtained adhesive film/aluminum laminate was heated for three minutes in a 200°C hot air oven. Then, the laminated adhesive film and the aluminum plate were attempted to be separated from each other at 100°C, but remained adhered rigidly to each other so that material failure could occur in the polypropylene resin film.

### (Comparative Example 1)

The adhesive film (A-1T) from Example 1 was attached to an aluminum plate in the same manner as in Example 1, and the resulting product was heated for three minutes in a 200°C hot air oven. Consequently, the adhesive film was slightly yellowed and had decreased viscosity. Hence, the heating time was changed to 30 seconds. In this case, the resulting adhesive film did not show yellowing and a decrease in viscosity, but was peelable by hand from the aluminum plate, which means that the adhesion was insufficient. Also, the adhesive film stuck to the hand when the film was attached to the aluminum plate, indicating poor workability.

### (Comparative Example 2)

A 50-µm-thick film (B-2T, arithmetic average surface roughness: 0.4 µm) was prepared in the same manner as in Example 1, but an unmodified polypropylene ethylene rubber (Versify 3401.05 produced by Dow Chemical, MFR = 8, melting point: 143°C, heat of fusion: 8 J/g) was used in place of the modified polyolefin resin pellets (A-1). The obtained film was heat-laminated to a polypropylene resin film (product of Toyobo Co., Ltd., PYLEN film-OT P2108, stretched film, 40 µ thick) at 200°C, whereby a laminated adhesive film (B-2L) was obtained. The adhesive film surface of the laminated adhesive film had an arithmetic average surface roughness of 0.4 µm and a level of surface tackiness of No. 4.
The obtained laminated adhesive film (B-2L) was cut to give a 25-mm square film, and the square film was attached to an aluminum plate (25 mm x 120 mm, thickness: 1 mm) by hand so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, and they were then easily separated from each other because of the low adhesion between the adhesive film surface and the aluminum plate.

### (Comparative Example 3)

The adhesive film (A-1T) from Example 1 was heat-laminated to a polypropylene resin film (product of Toyobo Co., Ltd., PYLEN film-CT P1111, non-stretched film, 50 µ thick) at 200°C, and then the adhesive film surface was roughened with sandpaper, whereby a laminated adhesive film (B-3L) was obtained. The adhesive film surface of the laminated adhesive film had an arithmetic average surface roughness of 1.5 µm and low surface tackiness so that a No. 2 ball did not stop.
The obtained laminated adhesive film (B-3L) was cut to give a 25-mm square film, and the square film was attempted to be attached to an aluminum plate (25 mm x 120 mm, thickness: 1 mm) so that the adhesive film surface could come into contact with an end portion of the aluminum plate. The laminated adhesive film, however, came off the aluminum plate, and thus failed to be attached to the plate.

### (Comparative Example 4)

An amount of 100 parts of random polypropylene (J229E produced by Prime Polymer Co., Ltd., MFR = 50, melting point: 138°C) and 0.5 parts of 1,3-di(t-butylperoxyisopropyl)benzene (product of NOF Corporation, PERBUTYL P, 1-minute half-life temperature: 175°C) were fed through a hopper inlet to a twin screw extruder (44 mmφ, L/D = 38.5, product of The Japan Steel Works, LTD., product name: TEX44XCT) which was set to have a cylinder temperature of 200°C and a screw rotation speed of 150 rpm, and they were melt-kneaded. Subsequently, 5 parts of styrene and 5 parts of glycidyl methacrylate were added in the middle of the cylinder and melt-kneaded to obtain modified polyolefin resin pellets (B-4). The obtained resin had a melting point of 138°C and a heat of fusion of 50 J/g. The obtained resin pellets (B-4) were fed through a hopper to a single screw extruder (product of Toyo Seiki Seisaku-sho, Ltd., product name: LABO PLASTOMILL, φ20 mm, L/D = 20) which was set to have cylinder and die temperatures of 200°C and a screw rotation speed of 100 rpm. The resin was extruded through a T-die mounted to the die tip, so as to be laminated onto a release-treated PET film, whereby a film (B-4T) having a width of about 13 cm and a thickness of 50 µm was obtained. The obtained film was heat-laminated to a polypropylene resin film (product of Toyobo Co., Ltd., PYLEN film-CT P1111, non-stretched film, 50 µ thick) at 200°C, whereby a laminated adhesive film (B-4L) was obtained. The adhesive film surface of the laminated adhesive film had an arithmetic average surface roughness of 0.4 µm but had low surface tackiness so that a No. 2 ball did not stop.

The obtained laminated adhesive film (B-4L) was cut to give a 25-mm square film, and the square film was attempted to be attached to an aluminum plate (25 mm x 120 mm, thickness: 1 mm) by hand so that the adhesive film surface could come into contact with an end portion of the aluminum plate. The laminated adhesive film, however, did not adhere to the aluminum plate at all, and thus failed to be attached to the plate.

### (Comparative Example 5)

An amount of 100 parts of polypropylene ethylene rubber (Vistamaxx 6202 produced by Exxon Mobil Corporation, MFR = 18, melting point: 113°C) and 0.5 parts of 1,3-di(t-butylperoxyisopropyl)benzene (product of NOF Corporation, PERBUTYL P, 1-minute half-life temperature: 175°C) were fed through a hopper inlet to a twin screw extruder (44 mmφ, L/D = 38.5, product of The Japan Steel Works, LTD., product name: TEX44XCT) which was set to have a cylinder temperature of 200°C and a screw rotation speed of 150 rpm, and they were melt-kneaded. Subsequently, 5 parts of styrene and 5 parts of glycidyl methacrylate were added in the middle of the cylinder and melt-kneaded to obtain modified polyolefin resin pellets (B-5). The obtained resin had a melting point of 113°C and a heat of fusion of 0.5 J/g. The obtained resin pellets (B-5) were fed through a hopper to a single screw extruder (product of Toyo Seiki Seisaku-sho, Ltd., product name: LABO PLASTOMILL, φ20 mm, L/D = 20) which was set to have cylinder and die temperatures of 200°C and a screw rotation speed of 100 rpm. The resin was extruded through a T-die mounted to the die tip, so as to be laminated onto a release-treated PET film, whereby a film (B-5T) having a width of about 13 cm and a thickness of 50 µm was obtained. The obtained film was heat-laminated to a polypropylene resin film (product of Toyobo Co., Ltd., PYLEN film-CT P1111, non-stretched film, 50 µ thick) at 200°C, whereby a laminated adhesive film (B-5L) was obtained. The adhesive film surface of the laminated adhesive film had an arithmetic average surface roughness of 0.4 µm and a level of surface tackiness of No. 5.

The obtained laminated adhesive film (B-5L) was cut to give a 25-mm square film, and the square film was attached to an aluminum plate (25 mm x 120 mm, thickness: 1 mm) so that the adhesive film surface came into contact with an end portion of the aluminum plate. The film was able to be easily attached, showed favorable adhesion of the adhesive film surface to the aluminum plate, and was not peeled off and did not come out of the desired position even when swung violently. The obtained adhesive film/aluminum laminate was heated for three minutes in a 200°C hot air oven. Then, the laminated adhesive film and the aluminum plate were attempted to be separated from each other at 100°C, and they were then easily separated from each other because the adhesive film surface was softened.

The laminated adhesive films described in Examples 1 to 7 satisfied the features defined in the present invention, and showed favorable workability, and adhesion particularly at high temperatures. In contrast, it is demonstrated that the adhesive film without the lamination of a thermoplastic resin film in Comparative Example 1 cannot be easily conditioned to achieve rigid adhesion without deteriorating the resin during heat bonding. It is also demonstrated that the film of Comparative Example 2 did not show adhesion to the metal component because the polyolefin resin was not modified. The film of Comparative Example 3 did not tightly adhere to the metal component because the adhesive film surface had poor smoothness. The film of Comparative Example 4 employed a resin with high heat of fusion, and thus showed poor tackiness and did not tightly adhere to the metal component. The film of Comparative Example 5 employed an adhesive film with a low melting point, and thus had greatly reduced adhesion at high temperatures.

## Claims

1. A laminated adhesive film for insert molding, comprising a laminate of
a tacky adhesive film containing a modified polyolefin resin obtained through graft-modification with a monomer that contains an ethylenic double bond and a polar group in the same molecule, and
a non-tacky thermoplastic resin film,
the laminated adhesive film satisfying the following conditions:
1) the modified polyolefin resin has a melting point of 120°C or higher,
2) the modified polyolefin resin has a heat of fusion of 20 J/g or lower, and
3) the adhesive film surface thereof has an arithmetic average surface roughness of 0.6 µm or less.

2. The laminated adhesive film for insert molding according to claim 1,
wherein the adhesive film contains a modified polyolefin resin obtained through graft-modification with an aromatic vinyl monomer and a monomer that contains an ethylenic double bond and a polar group in the same molecule.

3. The laminated adhesive film for insert molding according to claim 1 or 2,
wherein the monomer that contains an ethylenic double bond and a polar group in the same molecule is at least one selected from the group consisting of (meth)acrylic acid, maleic anhydride, and glycidyl (meth)acrylate.

4. The laminated adhesive film for insert molding according to any one of claims 1 to 3,
which has a total thickness of 30 to 300 µm.

5. The laminated adhesive film for insert molding according to any one of claims 1 to 4,
wherein the non-tacky thermoplastic resin film is a polyamide resin film.

6. The laminated adhesive film for insert molding according to any one of claims 1 to 5,
wherein a polyamide resin is injected in the insert molding.

7. The laminated adhesive film for insert molding according to any one of claims 1 to 4,
wherein the non-tacky thermoplastic resin film is a polypropylene resin film.

8. The laminated adhesive film for insert molding according to any one of claims 1 to 4 and 7,
wherein a polypropylene resin is injected in the insert molding.

9. An insert molding method, comprising:
laminating the laminated adhesive film for insert molding according to any one of claims 1 to 8 so as to bring the tacky adhesive film surface into contact with a metal component;
melting the adhesive film part by heating so as to adhere the film to the metal component;
placing the resulting laminated adhesive film-laminated metal component in a mold so that the non-tacky thermoplastic resin film surface faces the void of the mold; and
injection-molding thereon a resin of the same kind as used in the non-tacky thermoplastic resin film.
